# FASCICULE DE BREVET EUROPEEN

(11) **EP 1 182 136 B1**
(45) Date de publication et mention de la délivrance du brevet: **02.01.2003**
(21) Numéro de dépôt: 01402185.1
(22) Date de dépôt: 16.08.2001
(51) Int. Cl.: B64D 11/00

(54) **Boite à masques respiratoires pour installation de secours**
Behälter für Notsauerstoffmasken
Emergency oxygen mask box

(30) Priorité: 17.08.2000 FR 0010677
(43) Date de publication de la demande: 27.02.2002
(73) Titulaire: Intertechnique, 78373 Plaisir Cedex (FR)
(72) Inventeur: Martinez, Patrice, Intertechnique, 78373 Plaisir Cedex (FR)
(74) Mandataire: Fort, Jacques

(56) Documents cités:
- FR-A- 1 214 998
- US-A- 5 803 062

## Description

La présente invention concerne les boîtes de réception de masques respiratoires utilisées à bord des avions pour recevoir de tels masques et comportant une porte qui est ouverte de façon que chaque masque tombe à la disposition d'un passager et soit alimenté en gaz respiratoire, généralement en oxygène, en cas de dépressurisation.

Pour cela les boîtes, qui contiennent chacune un ou plusieurs masques, sont normalement maintenues fermées par un verrou. Les verrous de toutes les boîtes sont simultanément désarmés en cas d'urgence, en alimentant les conduites d'alimentation des masques sous une pression supérieure à un seuil déterminé ou en leur envoyant une commande électrique.

Les boîtes doivent être systématiquement vérifiées de façon périodique. Pour cela la boîte est ouverte manuellement par un opérateur qui vérifie qu'un masque est stocké et relié à l'alimentation en gaz. Au cours de cette opération il arrive fréquemment qu'un masque tombe et doive être replacé, ce qui est une opération délicate et prend du temps alors que celui-ci est limité, surtout lorsque l'opération s'effectue immédiatement avant un embarquement.

Une boîte de réception de masques respiratoires, ayant les caractéristiques du préambule de la revendication 1 est connue par example du brevet US-A-5803062.

La présente invention vise notamment à fournir des boîtes facilitant la vérification. Elle propose dans ce but une boîte dont le verrou est associé à des moyens rendus actifs par une commande, par exemple en réponse à une seconde pression pneumatique, (inférieure à une première pression qui provoque le désarmement des verrous lorsque les verrous sont désarmés par application d'une pression pneumatique dans la conduite d'alimentation des masques), ou par voie électrique, les dits moyens limitant alors l'ouverture de la boîte à une position d'entrebâillement empêchant la chute du masque ou des masques lorsque le verrou est ensuite désarmé.

Dans un mode particulier de réalisation, les dits moyens sont constitués par un plongeur porté par la porte, sollicité par des moyens de rappel vers une position où il est inactif et déplacé pneumatiquement dans une position où il coopère avec des moyens portés par un boîtier de la boîte pour limiter l'ouverture de la porte lorsqu'il est déplacé par application de la seconde pression. Le verrou de porte peut être un simple ensemble aimant - pièce ferromagnétique dont la force d'attraction est vaincue par un poussoir lorsque ce dernier est soumis à une pression de gaz respiratoire supérieure à un seuil déterminé.

L'invention concerne également un second aspect, avantageusement utilisable avec le premier mais pouvant l'être indépendamment, tenant compte du fait que la réserve d'oxygène disponible à bord d'un avion est limitée. Après dépressurisation à haute altitude les masques tombent, les passagers sont alimentés de façon permanente dès qu'ils ouvrent le robinet individuel d'alimentation du masque par traction sur un cordon auquel est attaché le masque et l'équipage amorce une descente puis coupe généralement l'arrivée d'oxygène dès retour vers 10 000 pieds ou 3000 mètres.

Mais il se pose alors le problème d'alimenter encore en oxygène ceux des passagers qui ont mal supporté la dépressurisation ou dont l'état de santé le nécessite. L'utilisation de bouteilles d'oxygène portables, encombrantes et lourdes, ne fournit qu'une solution peu satisfaisante. Le maintien de l'alimentation en demandant à l'équipage de cabine de fermer tous les robinets d'arrivée d'oxygène aux masques autres que ceux dont l'alimentation reste nécessaire prend beaucoup de temps.

L'invention vise également à fournir une boîte à masques et un dispositif d'alimentation en oxygène de secours permettant de surmonter les difficultés ci-dessus. Elle propose dans ce but une boîte comprenant, en plus de tubulures d'alimentation des masques recevant l'oxygène à travers un clapet à ouverture automatique en cas de fourniture d'une pression d'alimentation au moins égale à une première valeur p1 par une conduite d'amenée, une prise d'oxygène munie d'un clapet à ouverture automatique aussi longtemps que la pression dans la conduite dépasse une seconde valeur p3, inférieure à p1 et éventuellement à p2.

Les pressions p1 et p3 peuvent par exemple être respectivement comprises entre 3 et 4 bars et entre 2 et 2,5 bars par rapport à la pression dans la cabine. Lorsque la boîte est munie d'un verrou permettant une limitation d'ouverture, la pression p3 sera choisie inférieure à p2. L'échelonnement suivant est par exemple possible :
p1 : 350 kPa
p2 : 240 kPa
p3: 200 kPa

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :
- la figure 1 est un schéma destiné à montrer un principe de mise en oeuvre de l'invention, dans un cas particulier;
- la figure 2 est une vue éclatée montrant les composants essentiels d'un dispositif de mise en oeuvre d'un mode particulier de mise en oeuvre de l'invention ;
- la figure 3 est une vue éclatée de l'ensemble du circuit d'oxygène dans la boîte suivant une variante de la figure 2 ;
- la figure 4 est un schéma montrant un mode d'alimentation d'une prise de secours ;
- la figure 5 est une vue en coupe partielle montrant une constitution possible de prise de secours et d'alimentation de masque ;
- la figure 6 est une vue en coupe simplifiée, montrant un autre mode de réalisation encore ;
- la figure 7, similaire à la figure 6, montre la même boîte à l'état entrouvert ;
- la figure 8 est une représentation d'un autre mode de réalisation encore ; et
- la figure 9 est une représentation simplifiée d'un système d'alimentation en oxygène mettant en oeuvre l'invention.

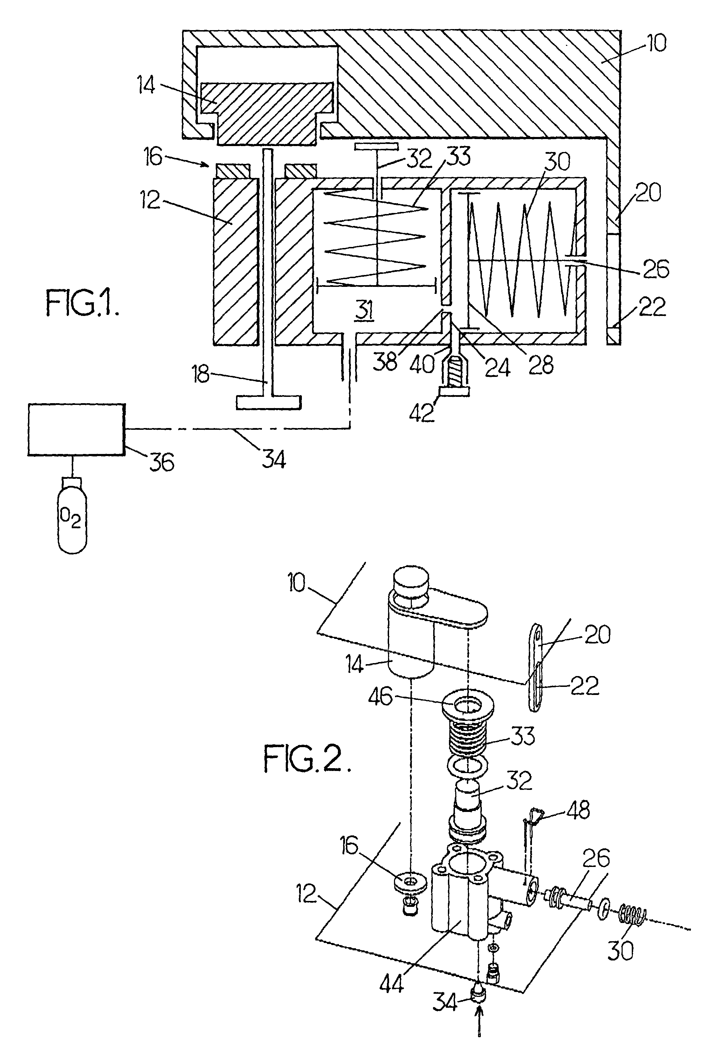

La boîte dont le système de verrouillage est montré schématiquement en figure 1 comporte un boîtier ou carcasse 10 fermé, en dehors des périodes d'utilisation ou de contrôle du masque, par une porte inférieure 12. Cette porte est articulée sur le boîtier par des moyens non représentés. Elle peut avoir une constitution générale classique ou conforme à EP-A-1 182 135 pour "Boîte à masques respiratoires de secours".

Un verrou de retenue de la porte en position de fermeture est constitué par un aimant 14 monté dans le boîtier et par une pièce 16 en matériau ferro-magnétique, généralement en forme de rondelle, fixée à la porte. L'aimant 14 présente un jeu de débattement dans le boîtier de façon que l'on puisse ouvrir manuellement la porte d'une boîte individuelle à l'aide d'un outil tel qu'une tige 18 introduit par un passage ménagé dans la porte. Cette tige, faisant saillie à l'extérieur de la porte, permet à l'opérateur de repousser l'aimant 14 à partir de la position montrée en figure 1, donc de séparer l'aimant de la rondelle et de provoquer l'ouverture de la porte. Dans une variante, la tige permet de tirer sur la porte. L'aimant peut alors être fixé au boîtier.

Pour permettre la mise en oeuvre de l'invention, le boîtier comporte des moyens de limitation d'ouverture. Les moyens représentés comportent une patte de limitation d'ouverture 20 présentant une ouverture 22 oblongue ou ovalisée dans le sens de l'ouverture, dont la longueur fixe le degré d'entrebâillement de la porte en vue de la vérification.

Dans la porte est ménagée une chambre 24 dans laquelle coulisse le piston 28 d'un plongeur 26. Un ressort 30 tend à maintenir le plongeur dans une position où il est éloigné de la patte 20. Les dimensions de la chambre sont telles que le plongeur peut avancer jusqu'à une position où il pénètre dans l'ouverture 22.

Dans la porte est également ménagée une chambre 31 de réception du piston d'un poussoir 32 d'ouverture pneumatique de la porte. Ce poussoir fait saillie de la porte vers le haut. Un ressort 33 le sollicite vers une position rétractée dans laquelle il est représenté sur la figure 1. Dans cet état, le poussoir n'exerce pas de force sur le boîtier.

Le fond de la chambre 31 et le piston délimitent un compartiment relié à un conduit 34 d'alimentation en oxygène destiné également à alimenter les masques respiratoires. Un organe de commande 36 permet de relier le conduit 34 et donc les chambres 31 de toutes les boîtes soit à l'atmosphère, soit à une pression p2 d'armement des plongeurs 26, soit à une pression p1, supérieure à p2, d'ouverture des boîtes et d'alimentation de robinets reliés aux tubes flexibles individuels de raccordement aux masques.

La chambre 31 est reliée à la chambre 24 par un trou calibré 38 destiné à ralentir la montée de la pression dans la chambre 24 par rapport à la montée dans la chambre 31 et donc à réaliser une temporisation lorsque la chambre 31 est alimentée. Un évent 40 obturé par une vis de purge 42 permet de relier la chambre 24 à l'atmosphère et de provoquer la rétraction du plongeur.

Le fonctionnement normal de la boîte est classique. Lorsque toutes les boîtes doivent être ouvertes, en cas d'urgence, le boîtier d'alimentation est commandé de façon à fournir à toutes les chambres une pression au moins égale à p1 et supérieure à p2 qui est généralement comprise entre 2 et 2,5 bars. La pression dans les chambres 31 augmente beaucoup plus vite que la pression dans les chambres 24, par suite de la temporisation, et atteint une valeur telle que les poussoirs 32 exercent sur le boîtier une force qui provoque l'ouverture des portes avant que les plongeurs 26 ne se soient engagés dans les ouvertures ovalisées des pattes. Les portes s'ouvrent complètement et les masques, généralement supportés par les portes, tombent.

Lorsque, par contre, les portes doivent être entrebâillées pour contrôler les masques, l'opération d'ouverture s'effectue en trois temps.

Dans un premier temps, les chambres sont alimentées sous une pression au moins égale à p2, mais inférieure à p1. En général, p2 sera comprise entre 2 et 2,5 bars lorsque p1 est comprise entre 3 et 4 bars. Cette pression p2 et les caractéristiques du ressort de rappel 33 sont choisies telles que le poussoir 32 n'exerce pas une force d'ouverture de la porte.

Le trou calibré est prévu pour que la pression dans la chambre 24 nécessaire pour engager le poussoir 26 dans l'ouverture 22 soit atteinte au bout d'un temps t1, généralement d'une dizaine de secondes. On pourra par exemple alors adopter une alimentation sous 2 bars pendant une durée de 15 secondes pour p1 = bars.

A l'issue de la durée t1, on augmente la pression d'alimentation jusqu'à la valeur p1. Le poussoir 32 monte et provoque l'ouverture de la porte. Une durée de quelques secondes, 4 secondes par exemple, suffit en général pour provoquer l'entrebâillement de la porte dans la mesure autorisée par la dimension de l'ouverture 22.

Au cours du troisième temps, qui est celui pendant lequel s'effectue la vérification, l'alimentation peut être ramenée à la valeur p2 de maintien du plongeur 26 ; le poussoir 32 se rétracte et la boîte reste entrebâillée.

Il reste possible d'ouvrir complètement chaque boîte à tout moment. Lorsque la porte est simplement entrebâillée, il suffit de dévisser la vis 42. Seule la boîte dont la vis a été desserrée s'ouvre complètement, du fait que le plongeur correspondant 26 se rétracte. Il est également possible de provoquer l'ouverture complète d'une boîte particulière en desserrant la vis de purge avant de commencer la séquence d'ouverture.

Le mode de réalisation montré en figure 1 ne constitue qu'un simple exemple. Les différents constituants du verrou, du mécanisme de poussée et du mécanisme de limitation d'ouverture peuvent être disposés différemment de ceux qui ont été décrits. En particulier, la disposition peut être inversée, certains des éléments indiqués sur la figure 1 comme appartenant à la porte pouvant être reportés sur le boîtier et inversement.

Dans la réalisation montrée en figure 2, la porte est constituée par un panneau plat sur lequel est fixé un corps 44 dans lequel sont ménagées les chambres 31 et 24. Le ressort 33 de rappel du poussoir 32 est retenu en compression par une rondelle 46 fixée au corps par des moyens non représentés. Le ressort 30 de rappel du plongeur 26 est lui-même retenu en compression par un cavalier 48.

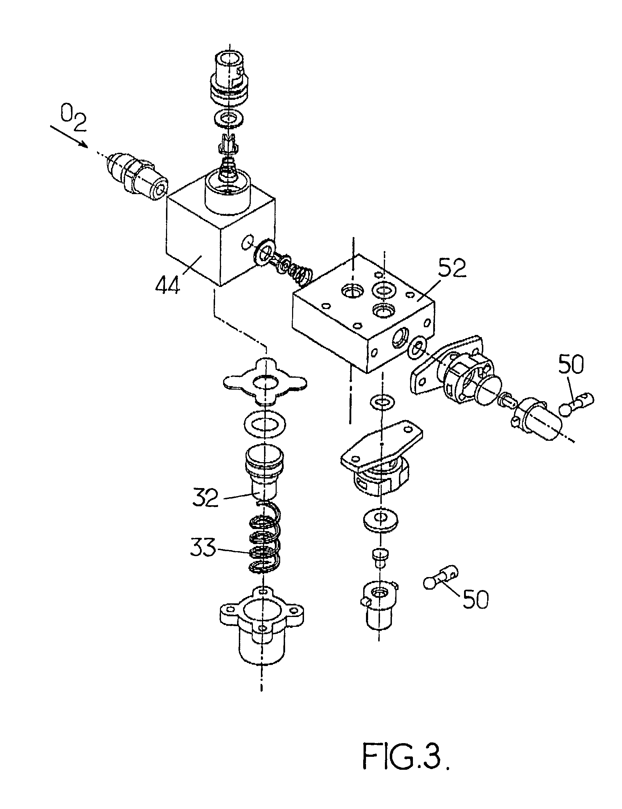

La figure 3 montre une partie d'un circuit pneumatique mettant en oeuvre une variante de la figure 2. Les éléments correspondants des deux figures sont désignés par le même numéro de référence. Le corps 44 est fixé à un boîtier distributeur 52 permettant d'alimenter cinq masques, par l'intermédiaire d'un clapet taré pour s'ouvrir sous la pression p1 et chacun par l'intermédiaire d'un robinet ouvert par arrachement d'une goupille 50 lorsque le passager tire sur le cordon de son masque. Les moyens de limitation d'ouverture ne sont pas représentés.

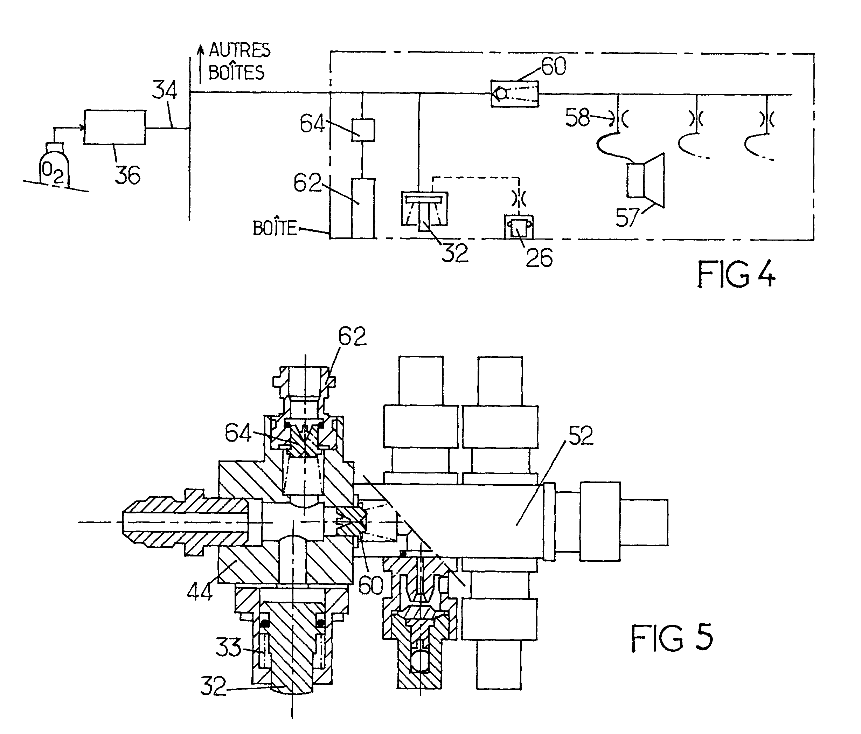

Suivant un autre aspect de l'invention, schématisé en figure 4, la boîte comprend, en plus des prises d'alimentation des masques, une prise d'oxygène munie d'un clapet à ouverture mécanique qui s'ouvre lorsque l'on connecte un masque thérapeutique. Dans le cas illustré la conduite d'alimentation générale en oxygène 34 est encore reliée dans chaque boîte à la commande pneumatique de désarmement du verrou, de maintien de la porte de la boîte et à un distributeur 52. Le déverrouillage est commandé par application d'une pression dépassant p1, à partir du boîtier 36 de mise en oeuvre de l'alimentation en oxygène. Les tubes souples 56 d'alimentation des masques 57, munis chacun d'un étranglement 58 de limitation de débit, sont alimentés par l'intermédiaire d'un clapet 60 taré pour ne rester ouvert que lorsque la pression d'alimentation atteint au moins la valeur seuil de p1.

La prise d'assistance 62 - qui peut être prévue pour être accessible sans ouvrir la boîte - est alimentée par la conduite 34 à travers un clapet 64 qui reste ouvert aussi longtemps que le masque reste connecté. Ainsi l'arrivée d'oxygène aux masques respiratoires d'urgence peut être coupée dès que l'avion est redescendu à une altitude de sécurité, en maintenant l'alimentation des prises de premier secours . Il suffit pour cela de réduire la pression relative par rapport à la cabine à une valeur au moins égale à p3, mais inférieure à p1 (et à p2 si une commande d'entrebâillement est prévue, comme indiqué en tirets sur la figure 4). Dans le cas où p2 est compris entre 2 et 2,5 bars, une valeur comprise entre 1,5 et 2 bars, suivant la valeur de p2, est utilisable.

L'alimentation de la conduite générale 34 est ensuite coupée lorsqu'elle n'est plus nécessaire. La constitution du clapet 64 peut être celle schématisée sur la figure 5 qui montre encore un distributeur permettant d'alimenter cinq masques et comporte une prise avec ouverture mécanique du clapet de sortie lors du raccordement d'un masque de premier secours.

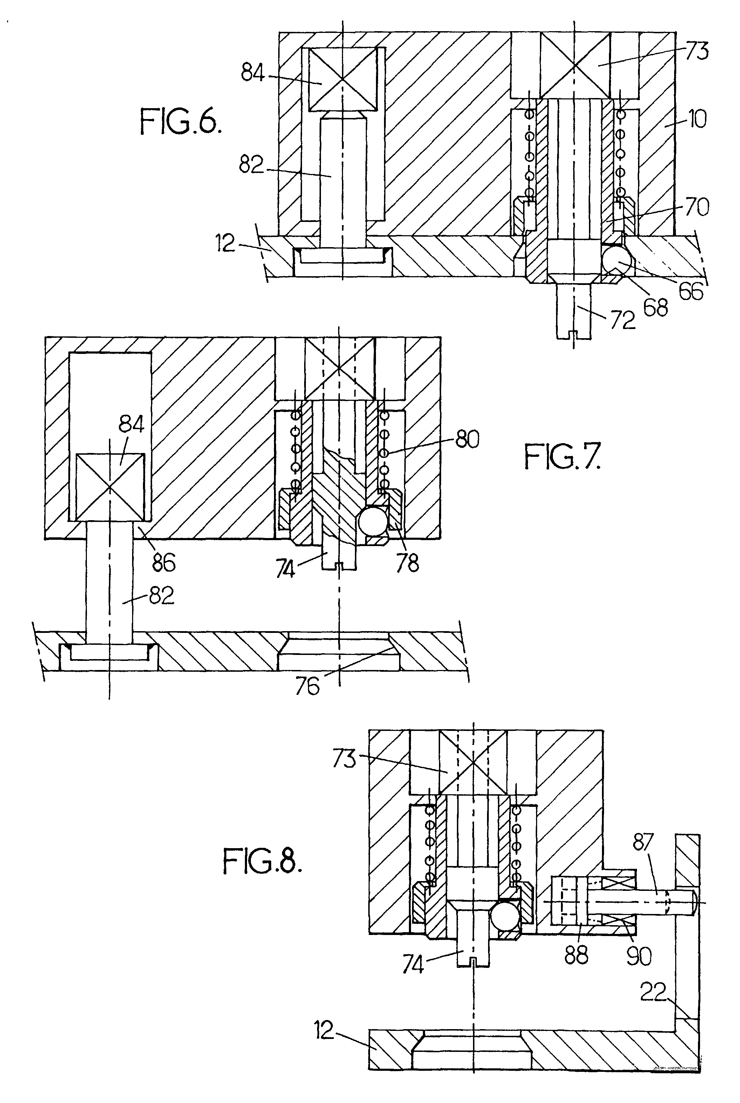

La boîte dont le système de verrouillage est montré schématiquement en figure 6, où les organes correspondant à ceux des figures précédentes sont désignés par le même numéro de référence, comporte encore un boîtier 10 et une porte 12. Le boîtier est dans la réalité en plusieurs pièces assemblées. Un verrou de retenue de la porte est constitué par une ou des billes 66 emprisonnées dans des passages radiaux 68 d'un fourreau 70. Lorsque la porte est fermée, les billes sont retenues dans la position où elles retiennent la porte 12 par un poussoir 72 que son poids maintient en position basse (figure 6).

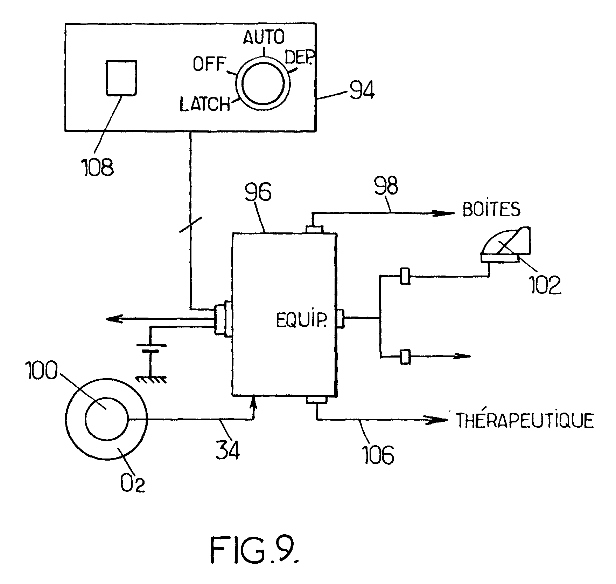

Pour ouvrir la porte, une bobine 73 portée par le boîtier est alimentée à partir d'une source non représentée. Elle attire alors le poussoir de la position montrée en figure 6 à la position de la figure 7. Ce mouvement du poussoir vers le haut amène un renflement 74 du poussoir au-dessus de l'emplacement des billes. Ces dernières reviennent alors vers l'intérieur sous la poussée d'une paroi évasée 76 d'une ouverture dans la porte. La porte est libérée et peut descendre. En même temps, une cuvette 78 coulissant dans un alésage du boîtier est amenée par un ressort 80 dans une position où elle retient les billes dans une position interne. Du fait de ce maintien des billes 66 par la cuvette, il est possible de refermer la porte simplement en la poussant vers le haut.

Les moyens de limitation d'ouverture de la boîte montrés en figures 6 et 7 comprennent un plongeur 82 fixé à la porte et un électro-aimant 84 monté flottant dans une cavité du boîtier. Lorsque la boîte est fermée, la porte 12 maintient le plongeur 82 dans la position montré en figure 6.

Lorsqu'on souhaite simplement entrebâiller la porte, on alimente à la fois l'électro-aimant 84 et la bobine 73. L'électro-aimant 84 retient alors le plongeur 82 qui ne peut pas dépasser la position montrée en figure 7, puisqu'il reste collé sur l'électro-aimant 84, lui-même retenu par un rebord 86 de la cavité. Le déverrouillage de la porte provoque alors la venue de celle-ci dans la position montrée en figure 7.

Lorsque, au contraire, on souhaite ouvrir totalement la boîte pour libérer les masques, la bobine 73 seule est alimentée. La porte 12 et le plongeur 82 peuvent alors dépasser la position de la figure 7.

Comme le montre la figure 6, le poussoir fait saillie sous la porte lorsque la boîte est fermée de sorte qu'il est possible de déverrouiller la boîte et de l'ouvrir simplement en appuyant à l'aide d'un outil sur la portion en saillie.

Dans la variante de réalisation montrée en figure 8, le verrou de retenue de la porte a la même constitution que sur la figure 6. Les moyens de limitation d'ouverture sont constitués par un plongeur 87 qui est actif lorsqu'il occupe la position montrée en traits pleins sur la figure, où il pénètre dans une ouverture 22 ménagée dans une patte en équerre de la porte 12. Ce plongeur est sollicité par un ressort 88 vers une position rétractée (en tirets) où il libère la porte. Une bobine 90 amène le plongeur 87, lorsqu'elle est alimentée, dans la position où il limite l'ouverture de la porte à la position montrée en figure 8.

En alimentant à la fois les deux bobines, alors que la porte est fermée, on provoque l'entrebâillement. L'alimentation de la bobine 73 seule permet de provoquer l'ouverture totale.

Dans une autre variante encore de réalisation, les deux bobines sont alimentées par les mêmes fils, mais l'amenée du plongeur 74 dans la position rétractée n'exige qu'un courant d'alimentation inférieur à un seuil déterminé en-dessous duquel le plongeur 87 reste rétracté.

Les modes de réalisation montrés en figures 6 à 8 présentent un intérêt tout particulier lorsque les masques sont alimentés non pas par un réseau d'oxygène de bord pouvant être alimenté sous pression réglable, mais par des générateurs chimiques.

Dans le mode de réalisation illustré en figure 9, l'organe de commande déjà évoqué se compose d'un panneau de commande 92 et d'une centrale électro-pneumatique 94 de distribution. Le panneau de commande 92 porte un bouton rotatif à quatre positions commandant les fonctions suivantes :
- off : boîtes fermées (conduite à l'atmosphère cabine),
- auto : les boîtes s'ouvrent automatiquement et complètement en cas de dépressurisation,
- deploy : les boîtes s'ouvrent complètement dès que le bouton est amené dans cette position,
- latch les boîtes s'ouvrent partiellement lorsque le bouton est amené dans cette position à partir de la position "off".

Le panneau de commande fournit les signaux électriques à la centrale 94 pour provoquer différentes séquences de fonctionnement. La centrale est purement électro-pneumatique et associée avec un calculateur de bord ou comporte elle-même une carte électronique de calcul.

Si le bouton est amené dans la position "latch" par un pilote ou un technicien de maintenance, la centrale fournit successivement, avec un échelonnement temporel approprié, les pressions p2 et p1 à la conduite 98 qui alimente les boîtes à masques.

Lorsque le bouton est sur "auto", toute dépressurisation détectée par un capteur (non représenté) provoque la fourniture d'oxygène provenant d'un détendeur 100 d'un boîte à oxygène aux boîtes à masques et également aux masques à oxygène 102 de l'équipage. Ces masques font saillie hors de boîtes de stockage de façon à être aisément saisies par les membres d'équipage. La pression p1 fournie dans ce cas peut être ajustée en fonction de la pression réelle dans la cabine une fois les boîtes ouvertes. La pression est habituellement réduite par la centrale lorsque l'avion a été amené à une altitude inférieure par le pilote.

Lorsque le bouton est amené dans la positon "deploy", les mêmes étapes que ci-dessus sont effectuées, quelle que soit la pression dans la cabine.

Dans le mode de réalisation de la figure 9, les prises d'oxygène thérapeutiques sont alimentées par une conduite séparée 106 en réponse à la pression sur un bouton 108 plutôt que par l'intermédiaire de la conduite commune 98. Mais une modification du système pour alimenter en oxygène la pression p3 par l'intermédiaire de la conduite 98 est également possible.

## Revendications

1. Boîte de réception de masques respiratoires comportant une porte (12) ayant un verrou de retenue (14,16) de la porte (12) en position fermée associé à des moyens (20,22) limitant l'ouverture de la porte (12) à une position d'entrebâillement empêchant la chute des masques (57) lorsque le verrou (14,16) est ensuite désarmé, **caractérisée en ce que** ces moyens (20,22) sont rendus actifs par une commande, soit électrique, soit en réponse à une seconde pression pneumatique (p2) inférieure à une première pression (p1) de désarmement du verrou.

2. Boîte selon la revendication 1, **caractérisée en ce que** le verrou est désarmé par application, de la première pression (p1) supérieure à la seconde pression (p2) dans une conduite d'alimentation des masques.

3. Boîte suivant la revendication 2, **caractérisée en ce que** les dits moyens de limitation comprennent un plongeur porté par la porte, sollicité par des moyens de rappel (30) vers une position où il est inactif et amené pneumatiquement dans une position où il coopère avec des moyens portés par un boîtier de la boîte pour limiter l'ouverture de la porte lorsqu'il est déplacé par application de la seconde pression.

4. Boîte suivant la revendication 2 ou 3, **caractérisée par** des moyens pour retarder l'augmentation de la pression agissant sur le plongeur (26).

5. Boîte suivant la revendication 2 ou 3, **caractérisée par** des moyens pour désarmer le verrou comprenant une chambre (31) de réception du piston d'un poussoir (32) qui est sollicité par un ressort (33) vers une position rétractée et qui est amené en saillie pour provoquer l'ouverture pneumatique de la porte lorsque la pression dans la chambre atteint la première valeur.

6. Boîte suivant la revendication 4, **caractérisée en ce que** la chambre (31) de réception du piston est reliée à une chambre (24) délimitée par le plongeur par un étranglement calibré destiné à ralentir la montée de la pression dans la chambre (24) par rapport à la montée dans la chambre (31) et à réaliser une temporisation lorsque la chambre (31) est alimentée.

7. Boîte suivant la revendication 6, **caractérisée par** un évent (40) obturé par une vis de purge (42) et permettant de relier la chambre 24 à l'atmosphère et de provoquer la rétraction du plongeur.

8. Boîte suivant l'une quelconque des revendications 3 à 7, **caractérisée en ce que** les dits moyens de limitation comportent une patte de limitation d'ouverture (20) présentant une ouverture (22) oblongue ou ovalisée dans le sens de l'ouverture dont la longueur fixe le degré d'entrebâillement de la porte, destinée à recevoir le plongeur (26).

9. Boîte suivant là revendication 3, **caractérisée en ce que** les moyens de désarmement du verrou comprennent une chambre (31) ménagée sur la porte, délimitée par le piston d'un poussoir (32) d'ouverture pneumatique de la porte qu'un ressort (33) sollicite vers une position rétractée et reliée à une conduite d'alimentation des masques, prévue pour que l'alimentation sous une pression au moins égale à la première pression (p1) amène le poussoir à exercer une force contre le boîtier.

10. Boîte suivant l'une quelconque des revendications précédentes , **caractérisée en ce que** la boîte comprend, en plus de tubulures d'alimentation des masques recevant l'oxygène à travers un clapet à ouverture automatique en cas de fourniture d'une pression au moins égale à la première valeur (p1) par une conduite d'amenée, une prise d'oxygène munie d'un clapet à ouverture automatique aussi longtemps que la pression dans la conduite dépasse une troisième valeur (p3) inférieure à la première pression (p1 ) et à la deuxième pression (p2).

11. Boîte suivant l'une quelconque des revendications 2 à 10, **caractérisée en ce que** les première, seconde et éventuellement troisième pressions sont respectivement comprises entre 3 et 4 bars, 2 et 2,5 bars et 1,5 à 2 bars.

12. Boîte selon la revendication 1, **caractérisée en ce que** le verrou est muni de moyens de désarmement par un signal électrique.

13. Système comprenant des boîtes selon la revendication 1 et des moyens de commande permettant de relier une conduite générale alimentant les boîtes à l'atmosphère, à de l'oxygène à la première pression et à de l'oxygène à la seconde pression.

## Patentansprüche

1. Aufnahmekasten für Atemmasken umfassend eine Tür (12) mit einem Verschluss (14, 26) zum Halten der Tür (12) in geschlossener Position, wobei der Verschluss Mitteln (20, 22) zugeordnet ist, die das Öffnen der Tür (12) auf einen Spaltbreit begrenzen und dabei das Herausfallen der Masken (57) verhindern, wenn der Verschluss (14, 16) dann freigegeben wird,
**dadurch gekennzeichnet, dass** diese Mittel (20, 22) durch eine Steuerung aktiviert werden, die entweder elektrisch ist oder auf einen zweiten pneumatischen Druck (p2) reagiert, der niedriger als ein erster Druck (p1) zum Freigeben des Verschluss ist.

2. Kasten nach Anspruch 1,
**dadurch gekennzeichnet, dass** der Verschluss durch den Einsatz des ersten Drucks (p1) freigegeben wird, der größer ist als der zweite Druck (p2) in einer Leitung zur Versorgung der Masken.

3. Kasten nach Anspruch 2,
**dadurch gekennzeichnet, dass** die Begrenzungsmittel einen von der Tür getragenen Tauchkolben umfassen, der durch Rückstellmittel (30) in einer Position gehalten wird, in der er inaktiv ist, und der pneumatisch in eine Position gebracht wird, in der er mit Mitteln zusammenwirkt, die von einem Gehäuse des Kastens getragen werden, um das Öffnen der Tür zu begrenzen, wenn er durch Einsatz des zweiten Durcks verschoben wird.

4. Kasten nach Anspruch 2 oder 3,
**dadurch gekennzeichnet, dass** Mittel zum Verzögern der Druckerhöhung auf den Tauchkolben (26) wirken.

5. Kasten nach Anspruch 2 oder 3,
**dadurch gekennzeichnet, dass** Mittel zum Freigeben des Verschlusses eine Kammer (31) zum Aufnehmen des Kolbens eines Vordrückers (32) umfassen, der von einer Feder (33) in einer zurückgezogenen Stellung gehalten wird, und der in eine vorstehende Position gebracht wird, um das pneumatische Öffnen der Tür zu bewirken, wenn der Druck in der Kammer den ersten Wert erreicht.

6. Kasten nach Anspruch 4,
**dadurch gekennzeichnet, dass** die Kammer (31), die den Kolben aufnimmt, durch eine kalibrierte Verengung mit einer Kammer (24) verbunden ist, die durch den Tauchkolben begrenzt ist, wobei die kalibrierte Verengung dazu bestimmt ist, den Druckanstieg in der Kammer (24) bezüglich dem Anstieg in der Kammer (31) zu verlangsamen und eine Verzögerung zu schaffen, wenn die Kammer (31) versorgt wird.

7. Kasten nach Anspruch 6,
**gekennzeichnet durch** einen Abzug (40), der **durch** eine Entlüftungsschraube (42) verschlossen ist, und es erlaubt, die Kammer (24) mit der Außenluft zu verbinden und das Zurückziehen des Tauchkolbens zu bewirken.

8. Kasten nach einem der Ansprüche 3 bis 7,
**dadurch gekennzeichnet, dass** die Begrenzungsmittel eine Leiste (20) zum Begrenzen des Öffnens umfassen, die eine längliche oder eine im Sinn des Öffnens unrunde Öffnung (22) umfasst, deren Länge den Öffnungsgrad der Tür festlegt, und die dazu bestimmt ist, den Tauchkolben aufzunehmen.

9. Kasten nach Anspruch 3,
**dadurch gekennzeichnet, dass** die Mittel zum Freigeben des Verschlusses eine Kammer (31) umfassen, die in der Tür eingebracht ist und die durch den Kolben eines Vordrückers (32) zum pneumatischen Öffnen der Tür begrenzt wird, welcher Vordrücker von einer Feder in einer zurückgezogenen Position gehalten wird, und die mit einer Leitung zur Versorgung der Masken verbunden ist, welche Leitung vorgesehen ist, damit die Versorgung den Vordrücker unter einem Druck, der mindestens gleich einem ersten Druck (p1) ist, zum Ausüben einer Kraft gegen das Gehäuse bringt.

10. Kasten nach einem der vorhergehenden Ansprüche,
**dadurch gekennzeichnet, dass** der Kasten zusätzlich zu den Stutzen zur Versorgung der Masken, die den Sauerstoff über eine Ventil mit automatischer Öffnung erhält, wenn ein Druck, der mindestens gleich dem ersten Wert (p1) ist, durch eine Zuleitung geliefert wird, einen Sauerstoffanschluss umfasst, der mit einem Ventil ausgestattet ist, das automatisch so lange geöffnet ist, bis der Druck in der Leitung einen dritten Wert (p3) unterschreitet, der niedriger als der erste Druck (p1) und der zweite Druck (p2) ist.

11. Kasten nach einem der Ansprüche 2 bis 10,
**dadurch gekennzeichnet, dass** der erste, zweite und möglicherweise dritte Druck zwischen 3 und 4 bar, 2 und 2,5 bar bzw. 1,5 bis 2 bar liegen.

12. Kasten nach Anspruch 1,
**dadurch gekennzeichnet, dass** der Verschluss mit Mitteln zum Freigeben durch ein elektrisches Signal ausgestattet ist.

13. System umfassend Kästen nach Anspruch 1 und Steuerungsmittel, die es erlauben, eine allgemeine, die Kästen mit der Außenluft versorgende Leitung, mit Sauerstoff des ersten Drucks und mit Sauerstoff des zweiten Drucks zu verbinden.

## Claims

1. Box for housing breathing masks, comprising a door (12) having a catch (14, 16) for holding the door (12) in a box closure position, associated with means (20, 22) limiting a degree of opening of the box (12) to a partially-open position preventing the masks (57) from falling out when the catch (14, 16) is later disabled, **characterized in that** said means (20, 22) are enabled by a command, either electrical or responsive to a second pneumatic pressure (p2) lower than a first pressure disabling the catch.

2. Box according to Claim 1, **characterized in that** the catch is disabled by applying the first pressure (p1) higher than the second pressure (p2) into a pipe supplying the masks.

3. Box according to Claim 2, **characterized in that** the said limiting means comprise a plunger carried by the door, urged by return means (30) toward a position in which it is inactive and apt to be brought pneumatically into a position in which it cooperates with means carried by a housing of the box so as to limit the degree of opening of the door when the plunger is moved by applying the second pressure.

4. Box according to Claim 2 or 3, **characterized by** means for delaying the increase in pressure acting on the plunger (26).

5. Box according to Claim 2 or 3, **characterized by** said means for disabling the catch comprising a chamber (31) for housing a piston of a push-rod (32) which is urged by a spring (33) toward a retracted position and which is made to project to cause pneumatic opening of the door when a pressure in the chamber reaches the first value.

6. Box according to Claim 4, **characterized in that** the chamber (31) housing the piston is connected to a chamber (24) defined by the plunger via a calibrated restriction for slowing rise in pressure in the chamber (24) as compared with pressure rise in the chamber (31) and to produce a time delay when the chamber (31) is supplied.

7. Box according to Claim 6, **characterized by** a vent (40) pluggable by a bleed screw (42) and allowing the chamber (24) to be connected to the atmosphere for causing retraction of the plunger.

8. Box according to any one of Claims 3 to 7, **characterized in that** said limiting means comprise a tab (20) for limitation of the degree of opening, having an aperture (22) which is elongated or ovalized in the direction of opening and the length of which determines the degree to which the door can be partially opened, the aperture being arranged to receive the plunger (26).

9. Box according to Claim 3 , **characterized in that** the catch disabling means comprise a chamber (31) formed in the door and limited by a piston of a push-rod 32 for pneumatically opening the door, said push-rod being urged by a spring (33) toward a retracted position in which it is depicted in Figure 1 and said chamber being connected to a mask supply pipe , constructed so that supply under a pressure at least equal to the first pressure (p1 )causes the push-rod to apply a force against the housing of the box.

10. Box according to any one of the preceding Claims, **characterized in that** the box comprises , in addition to tappings supplying the masks and receiving oxygen via a valve which automatically opens responsive to delivery of a pressure at least equal to the first value from a supply pipe, an oxygen tapping having a valve which remains automatically open as the pressure in the pipe exceeds a third value (p3) lower than the second value (p1) and the second value (p3).

11. Box according to any one of Claims 3 to 7, **characterized in that** the first, second and possibly third pressures lie respectively between 3 and 4 bar, between 2 and 2.5 bar and between 1.5 and 2 bar.

12. Box according to Claim 1, **characterized in that** the catch is provided with disabling means responsive to an electric signal.

13. System comprising a plurality of boxes according to claim 1 and control means enabling connection of a common pipe feeding the boxes to atmosphere, to oxygen at the first pressure and to oxygen at the second pressure.
